# EUROPÄISCHE PATENTSCHRIFT

(11) **EP 1 752 050 B1**
(45) Veröffentlichungstag und Bekanntmachung des Hinweises auf die Patenterteilung: **22.07.2009**
(21) Anmeldenummer: 06016678.2
(22) Anmeldetag: 10.08.2006
(51) Int. Cl.: A23L 1/185, A23G 3/48, A23L 1/0524, A23L 1/06

(54) **Verwendung einer Zusammensetzung mit Bierwürze als Gelee**
Use of a composition comprising beer-wort as a jelly
Utilisation d'une composition gélifiée contenant du moût de brasserie

(30) Priorität: 12.08.2005 DE 202005012934 U
(43) Veröffentlichungstag der Anmeldung: 14.02.2007
(73) Patentinhaber: Tomljanovic, Steffi, 06333 Bräunrode (DE)
(72) Erfinder: Tomljanovic, Steffi, 06333 Bräunrode (DE)
(74) Vertreter: Gulde Hengelhaupt Ziebig & Schneider

(56) Entgegenhaltungen:
- EP-A2- 0 873 691
- DE-A1- 19 628 696
- DE-A1- 19 736 477
- DE-U1- 29 605 552
- "Gelee aus Bierwürze im Kreisinformationszentrum erhältlich" LANDKREIS MANSFELDERLAND AMTSBLATT, [Online] Bd. 7, 22. Juli 2006 (2006-07-22), Seite 11, XP002409960 Gefunden im Internet: URL:www.mansfelderland.de> [gefunden am 2006-11-28]
- DATABASE WPI Week 199115 Derwent Publications Ltd., London, GB; AN 1991-106836 XP002409962 & JP 03 049654 A (HOUSE SHOKUHIN KOGYO KK) 4. März 1991 (1991-03-04)

## Beschreibung

Die Erfindung betrifft die Verwendung einer Zusammensetzung als Gelee für den menschlichen Verzehr auf der Basis von Bierwürze.

Die Zusammensetzung besteht überwiegend aus den untereinander homogen mischbaren Bestandteilen einer Bierwürze, hergestellt aus gebrannter Gerste und/oder gebranntem Weizen als entsprechendes Malz vorliegend, wobei die genannten Malzarten auch miteinander gemischt vorliegen, ferner Gelierzucker, Fruchtsäften, Fruchtstücken und/oder Gewürzen bzw. Kräuterextrakten.

Die Beimengung der neben der Bierwürze vorhandenen Zusätze ergibt ein mit dem markanten Aroma der Bierwürze versehenes Gelee, das zu seiner Haltbarkeit keinerlei weitere chemische Stoffe bedarf, da die Zusammenführung aller Bestandteile bei Kochtemperatur durchgeführt ist.

Das erfindungsgemäße Gelee besitzt neben einem Appetit anregenden Geschmack auch einen stärkenden, d.h. vitalisierenden Einfluss auf den menschlichen Organismus.

Gelees und Fruchtgelees sind seit langer Zeit bekannt.
Durch die Vielfalt von verwendbaren Obst- und Gemüsesorten gibt es bereits Gelees unterschiedlichster Geschmackrichtungen. Gelees mit einem wesentlichen Bestandteil von Bierwürze sind jedoch bislang nicht bekannt. Bisher war es üblich, den bekannten Brauvorgang lediglich für die Gewinnung von Bier durchzuführen. Die Verwendung des Zwischenproduktes Malz außerhalb der Bierherstellung ist, bis auf wenige spezielle Gesundheitspflegemittel oder in Produkten der Süßwarenindustrie, insbesondere in der Lebensmittelherstellung nicht vorgesehen.

Nachweislich besteht jedoch der Bedarf an neuen, innovativen Produkten aus der Lebensmittelherstellung, die insbesondere biologisch wertvoll sind und zudem ohne chemische Konservierungsmittel auskommen. Es wird oft nach neuen Geschmacksrichtungen gesucht und dabei in der Gelee-, Konfitüre-, Sirup- und/oder Marmeladenherstellung auf herkömmliche Rezepturen mit bekannten Grundstoffen zurückgegriffen, die vornehmlich Kristallzucker (Rüben-), künstliche Süßungsmittel und Geschmacksverstärker u. a. beinhalten. Gesundheitsfördernde Effekte stehen dabei nicht im Vordergrund.

Diesen Nachteilen soll mit der neuartigen Zusammensetzung eines schmackhaften und ernährungsphysiologisch wertvollen Lebensmittels abgeholfen werden.

Es ist damit Aufgabe der Erfindung, nach einer insbesondere auf natürlichen, biologisch reinen Bestandteilen basierenden Zusammensetzung eines Gelees mit geschmacklich neuartiger Note und zugleich mit einer gesundheitlich fördernden Wirkung zu suchen, wobei seine Zusammensetzung mit geringem technischen Aufwand unter vorrangiger Nutzung eines Vorproduktes der Bierproduktion, nämlich des Malzes in Form einer geläuterten und filtrierten Maische ( Bierwürze) gelingen soll, wobei weitere Nuancierungen unter Zugabe von Fruchtsäften, Früchten, Gewürzen, Kräutern, Wasser und Gelierzucker erreichbar sind.

Erfindungsgemäß wird die Aufgabe wie folgt gelöst, wobei hinsichtlich der grundlegenden erfinderischen Gedanken auf den Patentanspruch 1 verwiesen wird. Die weitere Ausgestaltung der Erfindung ergibt sich aus den Patentansprüchen 2 und 3.

Zur erfindungsgemäßen Lösung sollen weitere Erläuterungen folgen.

Es wurde gefunden, dass die Kombination von aus Malz, insbesondere der Getreidesorten Gerste und Weizen, und Wasser bestehenden Maische, die geläutert und filtriert als Bierwürze bezeichnet wird, unter Beimengung weiterer Anteile wie Gelierzucker, und/oder Fruchtsäften, und/oder Früchten bzw. Gewürzen und/oder Kräutern im kalten Zustand ein streichfähiges Gelee ergibt, das in seiner Grundtendenz einen markanten Geschmack, Geruch und auch eine typische Farbe in Abhängigkeit von der eingesetzten Bierwürze erbringt.
Zur Herstellung des Gemisches eines Gelees auf der Basis von Bierwürze eignen sich insbesondere:
a) Bierwürze aus Gerstenmalz
   - in heller Form durch niedrige Temperatur beim Abdarren, hergestellt für Pilsbier
   - in dunkler Form durch hohe Temperatur beim Abdarren, hergestellt für Schwarzbiere
b) Bierwürze aus Gerstenmalz mit mindestens 50% Weizenanteil, hergestellt für Weißbiere, die wie unter a) benannt in heller und dunkler Form
c) Gelierzucker, bestehend aus Zucker, einem Geliermittel (Pektin), einem Säuerungsmittel (Zitronensäure), einem natürlichen Konservierungsstoff (Sorbinsäure)

Einführend sei gesagt, dass nicht nur an die Verwendung der sogenannten Vorderwürze zur Kreation eines Gelees gedacht ist. Ebenso einsetzbar ist eine mit chargenweiße oder permanent mit Wasserzugabe versetzte Bierwürze. Die nutzbaren Bierwürzen besitzen naturgemäß eine ungleiche Konzentration von Stärkeabbauprodukten und Malzzucker. Diese prägen den Bierwürzgeschmack wesentlich.

Da in der Bierwürze Wasser enthalten ist, spielt auch dessen Eigenschaft eine Rolle für den Geschmack. Dieser wird durch den unterschiedlichen Mineraliengehalt des zum Einsatz kommenden Wassers geprägt.

Ersetzt man nun einen Teil der Bierwürze im Gelee durch Fruchtsäfte, Fruchtstücke und/oder Gewürze, besteht die Möglichkeit, eine reiche Geschmacksvielfalt, die jedoch hauptsächlich durch die verwendete Bierwürze gekennzeichnet bleibt, zusammenzustellen.

Die Erfindung soll anhand von Ausführungsbeispielen näher erläutert werden.

Die Kombination von Bierwürze mit Gelierzucker und Fruchtsäften, oder Gewürzen, oder Kräutern erbringt geschmacklich eine breite Vielfalt. So können nachfolgende Rezepturen in zweckmäßiger Zusammenstellung für ein Gelee auf der Basis von Bierwürze vorgeschlagen werden:
a) 1.600 ml flüssige Bierwürze
   200 ml z. B. Sauerkirschsaft (macht den Gelee etwas herber und dunkler)
   1.000 g Gelierzucker
b) 1.600 ml flüssige Bierwürze
   200 ml Bananesaft (macht den Gelee lieblicher und trüber)
   1.000 g Gelierzucker
c) 1.800 ml flüssige Bierwürze
   2 - 3 aufgeschnittene Vanillestangen in der Menge von ca. 30 g (Extrakt daraus)
   1.000 g Gelierzucker
d) 1.800 ml flüssige Bierwürze
   10 - 20 g frische oder getrocknete Kräuter (z. B. Anis-, Fenchel-, Thymiangemisch,
   d. h. Extrakt daraus)
   1.000 g Gelierzucker

Die angeführten Konzentrationen und Mengenangaben der Bierwürze, des Gelierzuckers können, bei geringfügiger Rezeptänderung, grundsätzlich für alle denkbaren und künftig zusammensetzbaren Gelees mit dem u. a. positiven Einfluss auf das menschliche Wohlbefinden verwendet werden.

Die Vorteile der Erfindung können wie folgt zusammengefaßt werden:
- Gelee mit einer völlig neuartigen Geschmacksrichtung in seiner Grundtendenz auf der Basis von Bierwürze
- Breite Vielfalt des Geschmacks durch Beimengung von Anteilen an Früchten und Gemüsen, auch in Saftform beigefügt, wobei auch noch Gewürze genutzt werden
- Kräftigende und gesundheitsfördernde Wirkung
- Konservierung erfolgt ohne künstliche Zusätze

## Patentansprüche

1. Verwendung einer Zusammensetzung bestehend aus Bierwürze, Gelierzucker und weiteren natürlichen, pflanzlichen Beimengungen und natürlichen Aromen für einen Gelee.

2. Verwendung gemäß Anspruch 1, wobei die Zusammensetzung natürliche, pflanzliche Beimengungen in Form von Fruchtstücken und/oder Fruchtsäften enthält.

3. Verwendung gemäß Anspruch 1, wobei die Zusammensetzung natürliche Aromen, wie Gewürze und/oder Kräuter beinhaltet.

## Claims

1. Use of a composition consisting of beer wort, preserving sugar and other natural, herbal admixtures and natural flavours for a jelly.

2. Use according to claim 1, whereby the composition contains natural, herbal admixtures in the form of fruit pieces and/or fruit juices.

3. Use according to claim 1, whereby the composition contains natural flavours like spices and/or herbs.

## Revendications

1. Utilisation d'une composition se composante de la bière condiment, du sucre gélifiant et d'autres compléments naturels et végétaux et de l'arômes naturels pour une gelée.

2. Utilisation selon la revendication 1, dans laquelle la composition comporte des compléments naturels et végétaux sous une forme de morceaux de fruits et/ou jus de fruits.

3. Utilisation selon la revendication 1, dans laquelle la composition comporte des arômes naturels comme des épices et/ou des herbes.
